# EUROPEAN PATENT APPLICATION

(11) **EP 2 747 464 A1**
(43) Date of publication of application: **25.06.2014**
(21) Application number: 13802846.9
(22) Date of filing: 19.04.2013
(51) Int. Cl.: H04W 4/18

(54) **SENT MESSAGE PLAYING METHOD, SYSTEM AND RELATED DEVICE**

(30) Priority: 05.11.2012 CN 201210436069
(71) Applicant: Huawei Technologies Co., Ltd, Shenzhen, Guangdong 518129 (CN)
(72) Inventor: LAI, Yizhe, Shenzhen Guangdong 518129 (CN)
(74) Representative: Maiwald Patentanwalts GmbH
(86) International application number: PCT/CN2013/074424
(87) International publication number: WO 2014/067269

(57) **Abstract**

Embodiments of the present invention disclose a method, a system, and devices for playing a message, and are applicable to the field of communications technologies. The message playing method includes: receiving, by a receiving terminal, a message that includes a user identifier and text information, obtaining a speech identifier and an image identifier corresponding to the user identifier, generating or obtaining a speech animation stream according to a speech characteristic parameter indicated by the speech identifier, an image characteristic parameter indicated by the image identifier, and the text information, and playing the speech animation stream. In this way, the text information in the message can be played as a speech animation stream according to the user identifier, the text information in the message can be presented vividly, and the message can be presented in a personalized manner according to the speech identifier and the image identifier corresponding to the user identifier.

## Description

This application claims priority to Chinese Patent Application No. 201210436069.X, filed with the Chinese Patent Office on November 5, 2012 and entitled "METHOD, SYSTEM, AND RELEVANT DEVICES FOR PLAYING SENT MESSAGE", which is incorporated herein by reference in its entirety.

### TECHNICAL FIELD

The present invention relates to the field of communications technologies, and in particular, to a method, a system, and relevant devices for playing a sent message.

### BACKGROUND

In a communications process in the prior art, a receiver side of a sent message generally presents the sent message directly, for example, parses text information in the sent message and then displays it, or parses a media stream in the sent message and then plays it. The presentation method lacks of diversification, and therefore cannot meet user requirements on the presentation of the sent message.

### SUMMARY

Embodiments of the present invention provide a method, a system, and relevant devices for playing a sent message, so that the sent message is presented in a personalized manner, thereby solving the problem of undiversified presentations in the prior art.

In a first aspect, an embodiment of the present invention provides a message playing method applicable to a terminal device. The method includes:
receiving a message, where the message includes a user identifier and text infonnation;
obtaining a speech identifier and an image identifier corresponding to the user identifier, where the speech identifier is used to indicate a speech characteristic parameter, and the image identifier is used to indicate an image characteristic parameter; and
generating or obtaining a speech animation stream according to the speech characteristic parameter indicated by the speech identifier, the image characteristic parameter indicated by the image identifier, and the text information, and playing the speech animation stream.

In a first possible implementation of the first aspect of the embodiment of the present invention, before receiving the message, the method further includes:
providing a setup interface, where the setup interface is used to receive a correspondence between the user identifier and the speech identifier and the image identifier; and
receiving the correspondence between the user identifier and the speech identifier and the image identifier from the setup interface, and storing the correspondence;
the obtaining a speech identifier and an image identifier corresponding to the user identifier includes:
   obtaining the speech identifier and the image identifier corresponding to the user identifier according to the stored correspondence.

With reference to the first aspect or the first possible implementation of the first aspect of the embodiment of the present invention, in a second possible implementation of the first aspect of the embodiment of the present invention, the generating a speech animation stream according to the speech characteristic parameter indicated by the speech identifier, the image characteristic parameter indicated by the image identifier, and the text information specifically includes:
obtaining, by the terminal device, the speech characteristic parameter indicated by the speech identifier, and obtaining the image characteristic parameter indicated by the image identifier;
converting, by the terminal device, the text information into a phoneme time sequence and a speech stream according to the speech characteristic parameter indicated by the speech identifier;
generating, by the terminal device, an animation stream according to the phoneme time sequence and the image characteristic parameter indicated by the image identifier; and
synchronizing and synthesizing, by the terminal device, the speech stream and the animation stream into a speech animation stream.

With reference to the second possible implementation of the first aspect of the embodiment of the present invention, in a third possible implementation of the first aspect of the embodiment of the present invention, before receiving the message, the method further includes:
obtaining an image sample and a speech sample;
extracting an image characteristic parameter of the image sample, and storing the image characteristic parameter and the image identifier according to a first correspondence; and
extracting a speech characteristic parameter of the speech sample, and storing the speech characteristic parameter and the speech identifier according to a second correspondence;
the obtaining the speech characteristic parameter indicated by the speech identifier and the image characteristic parameter indicated by the image identifier includes: obtaining, according to the second correspondence, the speech characteristic parameter indicated by the speech identifier, and obtaining, according to the first correspondence, the image characteristic parameter indicated by the image identifier.

With reference to the first aspect or the first possible implementation of the first aspect of the embodiment of the present invention, in a fourth possible implementation of the first aspect of the embodiment of the present invention, the obtaining a speech animation stream according to the speech characteristic parameter indicated by the speech identifier, the image characteristic parameter indicated by the image identifier, and the text information includes:
sending the speech identifier and the image identifier to a server, so as to instruct the server to generate a speech animation stream of the text information according to the speech characteristic parameter indicated by the speech identifier, the image characteristic parameter indicated by the image identifier, and the text information; and
obtaining the speech animation stream sent by the server.

With reference to the fourth possible implementation of the first aspect of the embodiment of the present invention, in a fifth possible implementation of the first aspect of the embodiment of the present invention, before receiving the message, the method further includes:
obtaining an image sample and a speech sample;
sending the image sample to the server, so as to instruct the server to extract an image characteristic parameter of the image sample and store the image characteristic parameter and the image identifier according to a first correspondence; and
sending the obtained speech sample to the server, so as to instruct the server to extract a speech characteristic parameter of the speech sample and store the speech characteristic parameter and the speech identifier according to a second correspondence.

In a second aspect, an embodiment of the present invention provides a message playing method applicable to a network server. The method includes:
receiving a message sent by a sending terminal, where the message includes text information and a user identifier of a user corresponding to the sending terminal;
obtaining a speech identifier and an image identifier corresponding to the user identifier which is sent by the sending terminal according to a pre-stored correspondence between the user identifier and the speech identifier and the image identifier, where the speech identifier is used to indicate a speech characteristic parameter, and the image identifier is used to indicate an image characteristic parameter;
generating a speech animation stream according to the speech characteristic parameter indicated by the speech identifier corresponding to the user identifier which is sent by the sending terminal, the image characteristic parameter indicated by the image identifier, and the text information; and
sending the generated speech animation stream to a receiving terminal, so that the receiving terminal plays the speech animation stream after receiving the stream.

In a first implementation of the second aspect of the embodiment of the present invention, the generating a speech animation stream according to the speech characteristic parameter indicated by the speech identifier corresponding to the user identifier which is sent by the sending terminal, the image characteristic parameter indicated by the image identifier, and the text information specifically includes:
obtaining the speech characteristic parameter indicated by the speech identifier and obtaining the image characteristic parameter indicated by the image identifier;
converting the text information into a phoneme time sequence and a speech stream according to the speech characteristic parameter indicated by the speech identifier;
generating an animation stream according to the phoneme time sequence and the image characteristic parameter indicated by the image identifier; and
synchronizing and synthesizing the speech stream and the animation stream into a speech animation stream.

With reference to the first possible implementation of the second aspect of the embodiment of the present invention, in a second possible implementation of the second aspect of the embodiment of the present invention, before receiving the message sent by the terminal device, the method further includes:
receiving an image sample and a speech sample sent by the terminal device;
extracting an image characteristic parameter of the image sample, and storing the image characteristic parameter and the image identifier according to a first correspondence; and
extracting a speech characteristic parameter of the speech sample, and storing the speech characteristic parameter and the image identifier according to a second correspondence;
the obtaining the speech characteristic parameter indicated by the speech identifier specifically includes: obtaining, according to the second correspondence, the speech characteristic parameter indicated by the speech identifier; and the obtaining the image characteristic parameter indicated by the image identifier specifically includes: obtaining, according to the first correspondence, the image characteristic parameter indicated by the image identifier.

In a third aspect, an embodiment of the present invention provides a terminal device, including:
a message receiving unit, configured to receive a message, where the message includes a user identifier and text information;
an identifier obtaining unit, configured to obtain a speech identifier and an image identifier corresponding to the user identifier in the sent message received by the message receiving unit, where the speech identifier is used to indicate a speech characteristic parameter required for generating a speech in the speech animation stream when generating the speech animation stream, and the image identifier is used to indicate an image characteristic parameter required for generating an image in the speech animation stream when generating the speech animation stream;
a media stream obtaining unit, configured to generate or obtain the speech animation stream according to the speech characteristic parameter indicated by the speech identifier, the image characteristic parameter indicated by the image identifier, and the text information; and
a playing unit, configured to play the speech animation stream generated or obtained by the media stream obtaining unit.

With reference to a first possible implementation of the third aspect of the embodiment of the present invention, the terminal device further includes:
an interface providing unit, configured to provide a setup interface, where the setup interface is used to receive a correspondence between the user identifier and the speech identifier and the image identifier; and
a first correspondence storing unit, configured to receive the correspondence between the user identifier and the speech identifier and the image identifier from the setup interface, and store the correspondence;
the identifier obtaining unit is specifically configured to obtain the speech identifier and the image identifier according to the correspondence stored by the first correspondence storing unit.

With reference to the third aspect or the first possible implementation of the third aspect of the embodiment of the present invention, in a second implementation of the third aspect of the embodiment of the present invention, the media stream obtaining unit specifically includes:
a characteristic obtaining unit, configured to obtain the speech characteristic parameter indicated by the speech identifier obtained by the identifier obtaining unit, and obtain the image characteristic parameter indicated by the image identifier obtained by the identifier obtaining unit;
a speech stream generating unit, configured to convert the text information into a phoneme time sequence and a speech stream according to the speech characteristic parameter indicated by the speech identifier;
an animation stream generating unit, configured to generate an animation stream according to the phoneme time sequence generated by the speech stream generating unit and the image characteristic parameter indicated by the image identifier; and
a synchronizing unit, configured to synchronize and synthesize the speech stream and the animation stream into a speech animation stream.

With reference to the second possible implementation of the third aspect of the embodiment of the present invention, in a third implementation of the third aspect of the embodiment of the present invention, the terminal device further includes:
a second correspondence storing unit, configured to: obtain an image sample, extract an image characteristic parameter of the image sample, and store the image characteristic parameter and the image identifier according to a first correspondence; and obtain a speech sample, extract a speech characteristic parameter of the speech sample, and store the speech characteristic parameter and the speech identifier according to a second correspondence;
the characteristic obtaining unit is specifically configured to obtain the image characteristic parameter indicated by the image identifier and the speech characteristic parameter indicated by the speech identifier respectively according to the first correspondence and the second correspondence stored by the second correspondence storing unit.

With reference to the third aspect or the first possible implementation of the third aspect of the embodiment of the present invention, in a fourth implementation of the third aspect of the embodiment of the present invention, the media stream obtaining unit specifically includes:
an identifier sending unit, configured to send the speech identifier and the image identifier to a server, so as to instruct the server to generate a speech animation stream of the text information according to the speech characteristic parameter indicated by the speech identifier, the image characteristic parameter indicated by the image identifier, and the text information; and
a sent media stream obtaining unit, configured to obtain the speech animation stream sent by the server.

With reference to the fourth possible implementation of the third aspect of the embodiment of the present invention, in a fifth implementation of the third aspect of the embodiment of the present invention, the terminal device further includes:
a sample sending unit, configured to: obtain an image sample and send the obtained image sample to the server, so as to instruct the server to extract an image characteristic parameter of the image sample and store the image characteristic parameter and the image identifier according to a first correspondence; and obtain a speech sample and send the obtained speech sample to the server, so as to instruct the server to extract a speech characteristic parameter of the speech sample and store the speech characteristic parameter and the image identifier according to a second correspondence.

In a fourth aspect, an embodiment of the present invention provides a server, including:
a sent message receiving unit, configured to receive a message sent by a sending terminal, where the message includes text information and a user identifier of a user corresponding to the sending terminal;
a media identifier obtaining unit, configured to obtain a speech identifier and an image identifier corresponding to the user identifier which is sent by the sending terminal according to a pre-stored correspondence between the user identifier and the speech identifier and the image identifier, where the speech identifier is used to indicate a speech characteristic parameter, and the image identifier is used to indicate an image characteristic parameter;
a media stream generating unit, configured to generate a speech animation stream according to the speech characteristic parameter indicated by the speech identifier corresponding to the user identifier which is sent by the sending terminal, the image characteristic parameter indicated by the image identifier, and the text information; and
a media stream sending unit, configured to send the generated speech animation stream to a receiving terminal, so that the receiving terminal plays the speech animation stream after receiving the stream.

In a first possible implementation of the fourth aspect of the embodiment of the present invention, the media stream generating unit specifically includes:
a media characteristic obtaining unit, configured to obtain the speech characteristic parameter indicated by the speech identifier and obtain the image characteristic parameter indicated by the image identifier;
a converting unit, configured to convert the text information into a phoneme time sequence and a speech stream according to the speech characteristic parameter indicated by the speech identifier;
a generating unit, configured to generate an animation stream according to the phoneme time sequence and the image characteristic parameter indicated by the image identifier; and
a synthesizing unit, configured to synchronize and synthesize the speech stream and the animation stream into a speech animation stream.

With reference to the first possible implementation of the fourth aspect of the embodiment of the present invention, in a second possible implementation of the fourth aspect of the embodiment of the present invention, the server further includes:
a sample receiving unit, configured to receive an image sample and a speech sample sent by the terminal device; and
a correspondence storing unit, configured to: extract an image characteristic parameter of the image sample, and store the image characteristic parameter and the image identifier according to a first correspondence; and extract a speech characteristic parameter of the speech sample, and store the speech characteristic parameter and the image identifier according to a second correspondence; and
the media characteristic obtaining unit is specifically configured to obtain, according to the second correspondence, the speech characteristic parameter indicated by the speech identifier, and obtain, according to the first correspondence, the image characteristic parameter indicated by the image identifier.

In a fifth aspect, an embodiment of the present invention provides a message playing system, including a receiving terminal and a server;
the receiving terminal is the terminal device described in the fourth or fifth implementation of the third aspect of the embodiment of the present invention; and
the server is configured to generate a speech animation stream of text information according to a speech characteristic parameter indicated by a speech identifier, an image characteristic parameter indicated by an image identifier, and the text information, and send the speech animation stream to the receiving terminal.

In a sixth aspect, an embodiment of the present invention provides a message playing system, including a receiving terminal and a network server;
the network server is the server described in any one of the implementations from the fourth aspect to the second implementation of the fourth aspect of the embodiment of the present invention; and
the receiving terminal is configured to receive a speech animation stream sent by the network server, and play the speech animation stream.

In the embodiments of the present invention, a receiving terminal receives a message that includes a user identifier and text information, obtains a speech identifier and an image identifier corresponding to the user identifier, generates or obtains a speech animation stream according to a speech characteristic parameter indicated by the speech identifier, an image characteristic parameter indicated by the image identifier, and the text information, and plays the speech animation stream. In this way, the text information in the message can be played as a speech animation stream according to the user identifier, the text information in the message can be presented vividly, and the message can be presented in a personalized manner according to the speech identifier and the image identifier corresponding to the user identifier.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for playing a sent message according to an embodiment of the present invention;
FIG. 2 is a schematic structural diagram of generating a speech animation stream according to an embodiment of the present invention;
FIG. 3 is a flowchart of another message playing method according to an embodiment of the present invention;
FIG. 4 is a schematic structural diagram of a method for playing a sent message according to a specific application embodiment of the present invention;
FIG. 5 is a schematic diagram of a setup interface provided by a terminal device according to an embodiment of the present invention;
FIG. 6 is a schematic structural diagram of another method for playing a sent message according to a specific application embodiment of the present invention;
FIG. 7 is a schematic structural diagram of another method for playing a sent message according to a specific application embodiment of the present invention;
FIG. 8 is a schematic structural diagram of a terminal device according to an embodiment of the present invention;
FIG. 9 is a schematic structural diagram of another terminal device according to an embodiment of the present invention;
FIG. 10 is a schematic structural diagram of another terminal device according to an embodiment of the present invention;
FIG. 11 is a schematic structural diagram of another terminal device according to an embodiment of the present invention;
FIG. 12 is a schematic structural diagram of a server according to an embodiment of the present invention;
FIG. 13 is a schematic structural diagram of another server according to an embodiment of the present invention; and
FIG. 14 is a schematic structural diagram of another server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

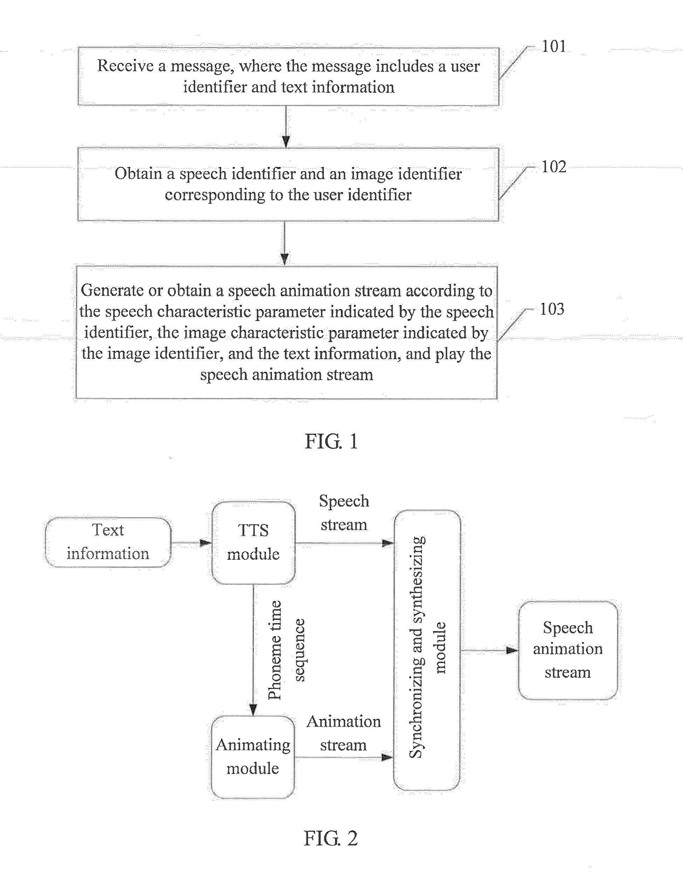

An embodiment of the present invention provides a message playing method, which is primarily applicable to a terminal device in communications. Upon receiving a sent message sent by a sending terminal, a receiving terminal plays the message. For example, upon receiving a short message sent by mobile phone 2, mobile phone 1 plays the short message. The method in this embodiment is executed by the receiving terminal, that is, a terminal device that receives the message. The flowchart is shown in FIG. 1. The method includes:
Step 101: The receiving terminal receives a message sent by the sending terminal, such as a short message, where the message includes text information and a user identifier of a user corresponding to the sending terminal.
Step 102: The receiving terminal obtains a speech identifier and an image identifier corresponding to the user identifier, where the speech identifier is used to indicate a speech characteristic parameter, and the image identifier is used to indicate an image characteristic parameter.

It can be understood that after receiving the message, the receiving terminal parses the message to obtain a user identifier that uniquely identifies a user, such as a subscriber identity module (Subscriber Identity Model, SIM) number used on the sending terminal or an account number registered by the user. The preset speech identifier and the image identifier corresponding to the user identifier may be searched out in the receiving terminal. The receiving terminal may pre-store speech identifiers and image identifiers corresponding to different user identifiers, such as identifiers corresponding to unknown contacts, and speech identifiers and image identifiers corresponding to contacts stored in the receiving terminal.

Specifically, the receiving terminal may set the speech identifier and the image identifier through the following steps:
A. The user operates keys (including physical keys or touch keys) of the receiving terminal to invoke a setup interface of the receiving terminal. The setup interface is used to receive a correspondence between a user identifier and the speech identifier and the image identifier. The setup interface may include the user identifier and information about selection of the speech identifier and the image identifier corresponding to the user identifier, for example, information about selecting an image identifier and a speech identifier stored in the receiving terminal.

The image identifier is information that uniquely identifies an image characteristic parameter in a database, that is, the database stores the image identifier and the image characteristic parameter by binding them; the speech identifier is information that uniquely identifies a speech characteristic parameter in a database, that is, the database stores the speech identifier and the speech characteristic parameter by binding them. An image characteristic refers to an attribute of an image presented to the user, such as the color, line or contour of the image. The image characteristic may be expressed by an image characteristic parameter such as a pixel. A speech characteristic refers to an attribute of a speech presented to the user, such as the timbre, pitch, or volume of the speech. The speech characteristic may be expressed by a speech characteristic parameter such as keynote, mel-cepstrum and formant.
B. After the user selects an image identifier and a speech identifier, when the receiving terminal receives from the setup interface the speech identifier and the image identifier selected by the user corresponding to the user identifier, the receiving terminal stores a correspondence between the user identifier and the selected speech identifier and image identifier. In this way, according to the correspondence stored in step B, the receiving terminal may obtain the speech identifier and the image identifier corresponding to the user identifier in the message received in step 101.

Step 103: Generate or obtain a speech animation stream according to the speech characteristic parameter indicated by the speech identifier, the image characteristic parameter indicated by the image identifier, and the text information, and play the speech animation stream.

It should be noted that the receiving terminal may generate the speech animation stream according to the speech characteristic parameter and the image characteristic parameter, or may send the speech characteristic parameter and the image characteristic parameter to a server so that the server generates the speech animation stream and returns the speech animation stream to the receiving terminal for playing, and in this case, the receiving terminal does not need to generate the speech animation stream and the operation load of the receiving terminal is relieved.

Before generating the speech animation stream, the receiving terminal or server needs to obtain the speech characteristic parameter indicated by the speech identifier and the image characteristic parameter indicated by the image identifier, so that the speech animation stream can be generated according to a speech animation technology. The image characteristic parameter and the speech characteristic parameter may be obtained by searching a database of the receiving terminal or the server.

When generating a speech animation stream according to the speech animation technology, the receiving terminal or the server may use a TTS module, an animating module, and a synchronizing and synthesizing module to generate the speech animation stream. FIG. 2 gives a schematic structural diagram, which is primarily a combination of a text-to-speech (Text to Speech, TTS) technology and an animation technology. The TTS is a technology for converting text information into a standard smooth speech in real time for reading out, and the animation technology refers to synthesizing motions of specific images by using computer technologies. For example, a human face animation technology includes face modeling and facial expression animating. In this embodiment, according to the speech characteristic parameter indicated by the speech identifier, the TTS module may convert the text information into a speech stream and a phoneme time sequence corresponding to the text information, for example, time order of reading each word in the text information in the speech stream, and an interval between the words. The animating module may generate an animation stream according to the phoneme time sequence and the image characteristic parameter. Specifically, image modeling may be performed according to the image characteristic parameter first, and then the image motion state at the time of reading out each word in the text information is determined in the speech stream, and then an animation stream is formed according to the phoneme time sequence. Finally, the synchronizing and synthesizing module synchronizes and synthesizes the speech stream and the animation stream into a speech animation stream.

As seen above, in the embodiment of the present invention, a receiving terminal receives a message that includes a user identifier and text information, obtains a speech identifier and an image identifier corresponding to the user identifier, generates or obtains a speech animation stream according to a speech characteristic parameter indicated by the speech identifier, an image characteristic parameter indicated by the image identifier, and the text information, and plays the speech animation stream. In this way, the text information in the message can be played as a speech animation stream according to the user identifier, the text information in the message can be presented vividly, and the message can be presented in a personalized manner according to the speech identifier and the image identifier corresponding to the user identifier.

It should be noted that when the receiving terminal performs step 103, the receiving terminal may generate the speech animation stream, which requires the receiving terminal to determine the speech characteristic parameter indicated by the speech identifier and the image characteristic parameter indicated by the image identifier, where the speech characteristic parameter and the image characteristic parameter may be preset in the receiving terminal by the user. Specifically, when presetting the image characteristic parameter, the receiving terminal may obtain an image sample first, for example, obtain an image sample through a camera or search for an image sample locally, and then extract the image characteristic parameter of the image sample. For example, the image characteristic parameter is a parameter for denoting a characteristic such as a color and line. The extracted image characteristic parameter is identified by an image identifier uniquely, and the image characteristic parameter and the image identifier are stored according to a first correspondence. When presetting the speech characteristic parameter, the receiving terminal may obtain a speech sample first, for example, obtain a speech sample through a recorder or search for a speech sample locally, and then extract the speech characteristic parameter of the speech sample. For example, the speech characteristic parameter is a parameter for denoting a characteristic such as timbre, pitch, and volume. The extracted speech characteristic parameter is identified by a speech identifier uniquely, and the speech characteristic parameter and the speech identifier are stored according to a second correspondence. In this way, when obtaining the speech characteristic parameter indicated by the speech identifier, the receiving terminal can obtain, according to the stored second correspondence, the speech characteristic parameter indicated by the speech identifier obtained in step 102; when obtaining the image characteristic parameter indicated by the image identifier, the receiving terminal can obtain, according to the stored first correspondence, the image characteristic parameter indicated by the image identifier obtained in step 102.

In another embodiment, when the receiving terminal performs step 103, the receiving terminal may send the speech identifier and the image identifier obtained in step 102 to a server first, and the server generates a speech animation stream. In this case, the server needs to determine the speech characteristic parameter indicated by the speech identifier and the image characteristic parameter indicated by the image identifier, where the speech characteristic parameter and the image characteristic parameter may be preset in the server by the receiving terminal through the network. Specifically, the receiving terminal may obtain an image sample and send the image sample to the server, so as to instruct the server to extract an image characteristic parameter of the image sample and store the image characteristic parameter and the image identifier according to the first correspondence; the receiving terminal may further obtain a speech sample and send the speech sample to the server, so as to instruct the server to extract a speech characteristic parameter of the speech sample and store the speech characteristic parameter and the speech identifier according to the second correspondence. In this way, the server can generate a speech animation stream according to the speech characteristic parameter, the image characteristic parameter, and the text information.

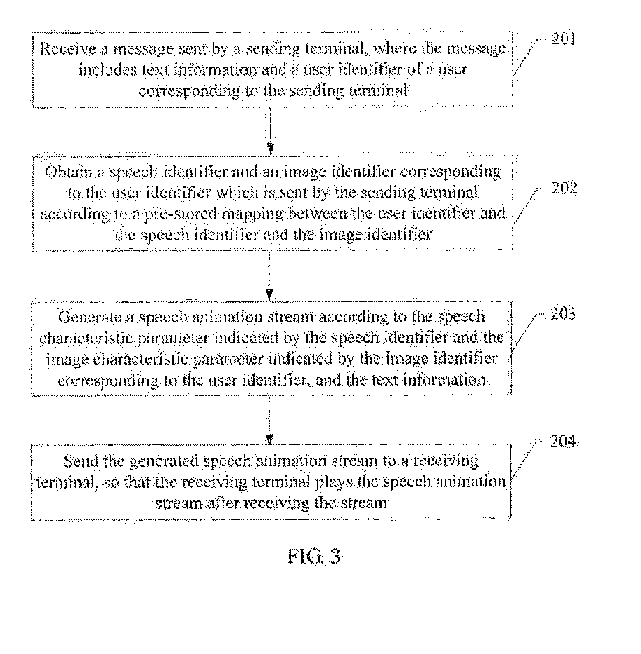

An embodiment of the present invention provides a message playing method, which is primarily applicable to a terminal device in communications. Through a network server, a sending terminal sends a message to a receiving terminal for playing. For example, upon receiving a short message sent by mobile phone 2 through the network server, mobile phone 1 plays the short message. The method in this embodiment is executed by the network server, and the network server may be any network device in a path from the sending terminal to the receiving terminal. The flowchart is shown in FIG. 3. The method includes:
Step 201: The network server receives a message (such as a short message) sent by the sending terminal (such as a mobile phone), where the message includes text information and a user identifier of a user corresponding to the sending terminal.
Step 202: The network server obtains a speech identifier and an image identifier corresponding to the user identifier which is sent by the sending terminal according to a pre-stored correspondence between the user identifier and the speech identifier and the image identifier, where the speech identifier is used to indicate a speech characteristic parameter, and the image identifier is used to indicate an image characteristic parameter.

It can be understood that while the sending terminal sends the message to the receiving terminal, after the message passes through the network server, the network server parses the message to obtain a user identifier that uniquely identifies the user corresponding to the sending terminal. For example, the user identifier is a SIM card number used on the sending terminal, that is, a mobile phone number. According to the correspondence preset in the network server, the speech identifier and the image identifier corresponding to the user identifier which is sent by the sending terminal can be searched out. The network server may pre-store speech identifiers and image identifiers corresponding to different user identifiers. Such information may be preset by the receiving terminal into the network server through the network. For example, the receiving terminal may synchronize the speech identifiers and the image identifiers corresponding to contacts stored in the receiving terminal to the network side.
Step 203: The network server generates a speech animation stream according to the speech characteristic parameter indicated by the speech identifier, the image characteristic parameter indicated by the image identifier, and the text information. Before generating the speech animation stream, the network server needs to obtain the speech characteristic parameter indicated by the speech identifier and the image characteristic parameter indicated by the image identifier. After that, the network server generates a speech animation stream according to a speech animation technology. Specifically, a TTS module, an animating module, and a synchronizing and synthesizing module may be used to generate the speech animation stream. The specific generation process is similar to the process of generating a speech animation stream by the receiving terminal, and is not detailed herein.

The image characteristic parameter and the speech characteristic parameter obtained by the network server may be preset in the network server according to an image sample and a speech sample provided by the receiving terminal respectively. Specifically, the network server may receive the image sample sent by the receiving terminal, extract an image characteristic parameter of the image sample, use an image identifier to identify the extracted image characteristic parameter uniquely, and store the image characteristic parameter and the image identifier according to a first correspondence. Further, the network server may receive the speech sample sent by the receiving terminal, extract a speech characteristic parameter of the speech sample, use a speech identifier to identify the extracted speech characteristic parameter uniquely, and store the speech characteristic parameter and the speech identifier according to a second correspondence. In this way, when obtaining the speech characteristic parameter indicated by the speech identifier, the network server can obtain, according to the stored second correspondence, the speech characteristic parameter indicated by the speech identifier obtained in step 202; when obtaining the image characteristic parameter indicated by the image identifier, the network server can obtain, according to the stored first correspondence, the image characteristic parameter indicated by the image identifier obtained in step 202.
Step 204: The network server sends the generated speech animation stream to the receiving terminal, so that the receiving terminal plays the speech animation stream after receiving the stream.

In the embodiment of the present invention, while the message that includes text information and a user identifier corresponding to the sending terminal is sent from the sending terminal to the receiving terminal, after the message passes through the network server, the network server obtains the speech identifier and the image identifier corresponding to the user identifier, generates a speech animation stream, and sends the generated speech animation stream to the receiving terminal for playing. The speech animation stream is generated by the server according to the speech characteristic parameter indicated by the speech identifier, the image characteristic parameter indicated by the image identifier, and the text information. In this way, the text information in the message can be played as a speech animation stream according to the user identifier, the text information in the message can be presented vividly, and the message can be presented in a personalized manner according to the speech identifier and the image identifier corresponding to the user identifier. Furthermore, in this embodiment, the receiving terminal does not need to generate the speech animation stream, which relieves the load of the terminal.

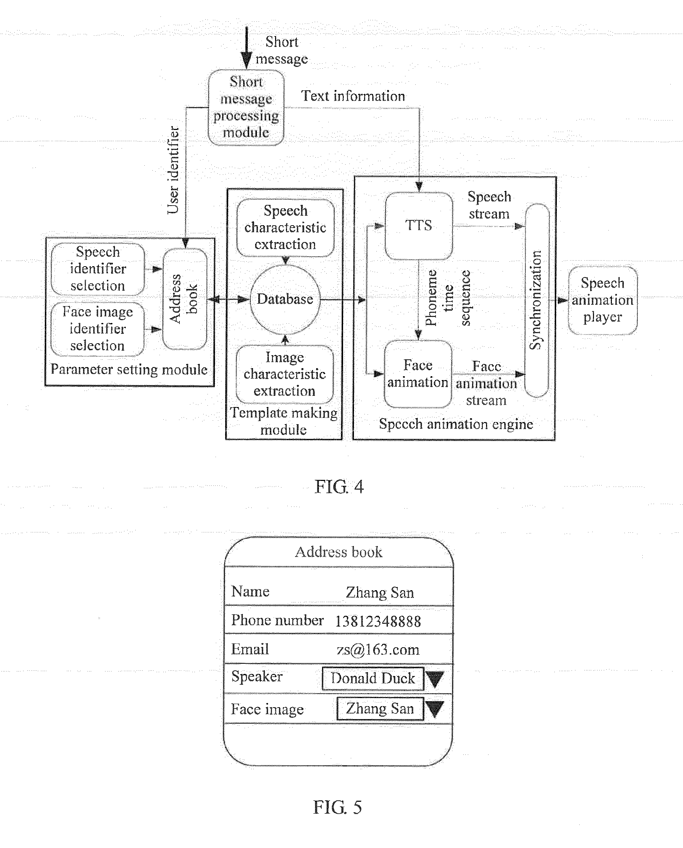

The following uses a specific embodiment to describe the message playing method disclosed by an embodiment of the present invention. As shown in FIG. 4, a receiving terminal in this embodiment includes a short message processing module, a parameter setting module, a template making module, a speech animation engine, and a speech animation player.

The parameter setting module may set a face image identifier and a speech identifier corresponding to each contact in an address book. Specifically, the user operates the receiving terminal so that the parameter setting module provides a setup interface for setting information about a contact in the address book. As shown in FIG. 5, the user may edit the name, phone number, and email address of the contact, and may select a speaker identifier, that is, a speech identifier, and select a face image identifier, that is, an image identifier. Specifically, the user may make selection in a drop-down menu. The image identifier or speech identifier displayed in the drop-down menu is already stored in a database of the receiving terminal. When the database is updated, the speech identifier and the image identifier displayed in the drop-down menu may be updated synchronously. When receiving information edited by the user from the setup interface, the receiving terminal stores the information edited by the user, such as the name, phone number, email address, and a correspondence between the speaker identifier and face image identifier.

The template making module may obtain a face image sample through a camera or search for a face image sample locally, and then extract an image characteristic parameter of the face image sample. For example, the face image characteristic parameter is a parameter for denoting a characteristic such as a face contour. The template making module uses an image identifier such as "Zhang San" to identify the image characteristic parameter, and stores a correspondence between the image identifier and the image characteristic parameter into a database. Also, the template making module may obtain a speech sample through a recorder or search for a speech sample locally, and then extract a speech characteristic parameter of the speech sample. For example, the speech characteristic parameter is a parameter for denoting a characteristic such as timbre and pitch. The template making module uses a speech identifier such as "Donald Duck" to identify the speech characteristic parameter, and stores a correspondence between the speech identifier and the speech characteristic parameter into the database.

When receiving a short message sent by another mobile terminal, the short message processing module of the receiving module notifies the parameter setting module of a user identifier in the short message, such as a SIM card number of the opposite terminal, and sends the text information in the short message to the speech animation engine. Thereby, the parameter setting module searches the address book for the face image identifier and the speech identifier corresponding to the SIM card number, and transmits them to the template making module. The template making module searches the database for the face image characteristic parameter indicated by the face image identifier and the speech characteristic parameter indicated by the speech identifier, and transmits them to the speech animation engine. A TTS module in the speech animation engine generates a speech stream and a phoneme time sequence according to the text information and the speech characteristic parameter, and the face animating module generates a face animation stream according to the phoneme time sequence and the face image characteristic parameter. Finally, the synchronizing module synchronizes and synthesizes the speech stream and the face animation stream into a speech animation stream, and transmits the speech animation stream to a speech animation player for playing.

With the receiving terminal generating and playing the speech animation stream, the short message is played vividly, and the user can play the message as required.

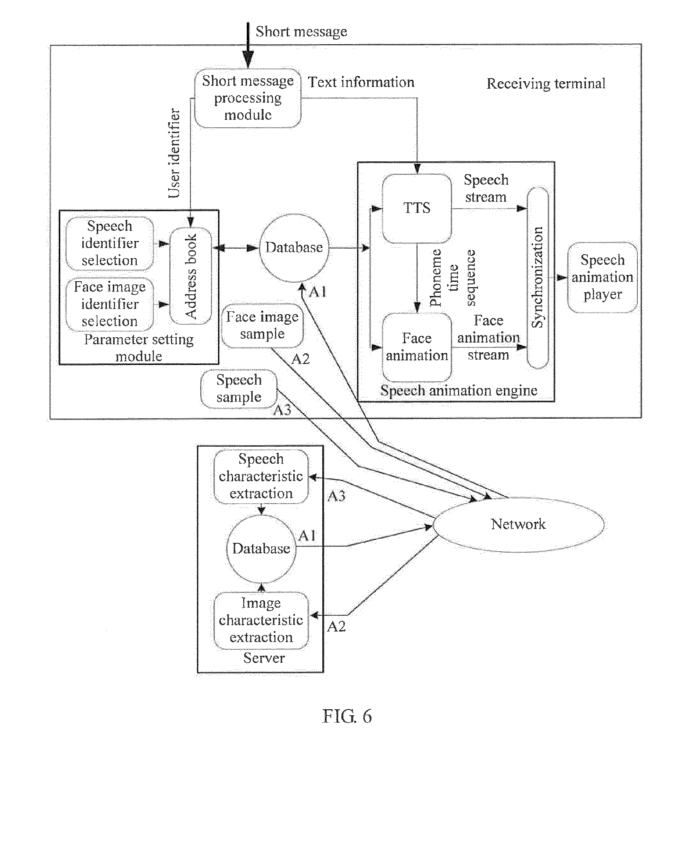

As shown in FIG. 6, the receiving terminal in this embodiment includes a short message processing module, a parameter setting module, a database, a speech animation engine, and a speech animation player.

The receiving terminal may send the obtained face image sample to a server through an A2 interface, and send the obtained speech sample to the server through an A3 interface. The server extracts the image characteristic parameter or speech characteristic parameter and stores them into the database of the server, and after updating the database, the server may send the updated information to the receiving terminal through an A1 interface to update the database of the receiving terminal. Therefore, in this embodiment, after receiving a short message, the receiving terminal generates a speech animation stream in a way similar to the embodiment shown in FIG. 3. The difference is that in this embodiment, when obtaining the speech characteristic parameter indicated by the speech identifier and the face image characteristic parameter indicated by the face image identifier, the receiving terminal may obtain them from the database of the receiving terminal or from the database of the server. In this way, the receiving terminal does not need to extract the image characteristic parameter and the speech characteristic parameter.

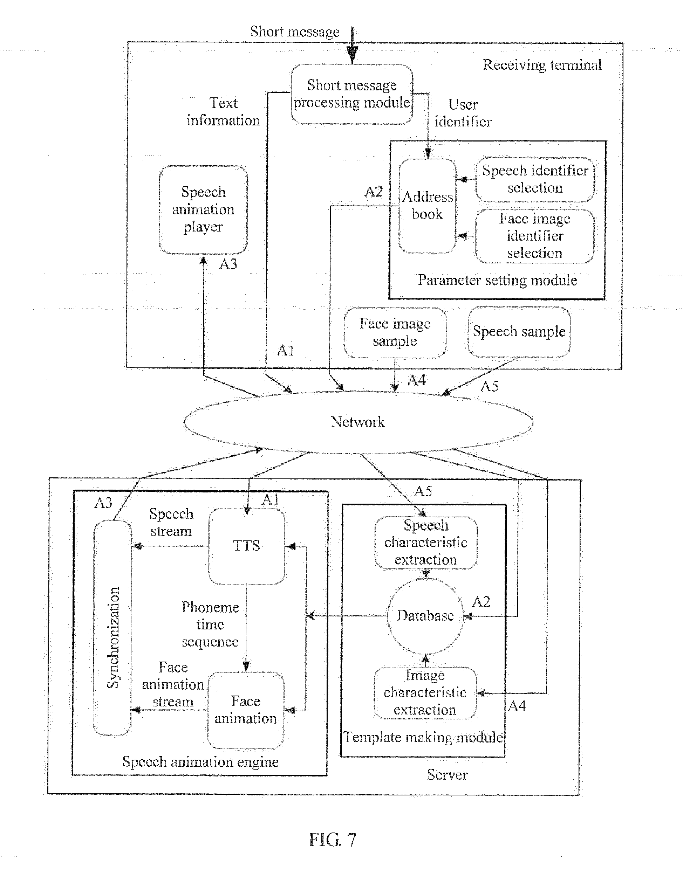

As shown in FIG. 7, in this embodiment, the speech animation stream is generated on the server side, and the receiving terminal includes a short message processing module, a parameter setting module, and a speech animation player; and the server includes a template making module and a speech animation engine.

The receiving terminal may send the obtained face image sample to a server through an A4 interface, and send the obtained speech sample to the server through an A5 interface. The template making module in the server extracts the image characteristic parameter or speech characteristic parameter and then stores them into a database of the server. Therefore, in this embodiment, after receiving the short message, the receiving terminal sends the text information in the message to the speech animation engine in the server through an A1 interface, and sends a user identifier such as a SIM card number of the opposite terminal to the parameter setting module of the receiving terminal. The parameter setting module searches an address book for the corresponding speech identifier and image identifier, and then sends the speech identifier and the image identifier to the template making module of the server through an A2 interface. The speech animation engine works with the template making module in the server to generate a speech animation stream, and then sends the stream to a speech player of the receiving terminal through an A3 interface to play the stream. Thereby, the process of generating the speech animation stream is not required on the receiver side, which reduces power consumption.

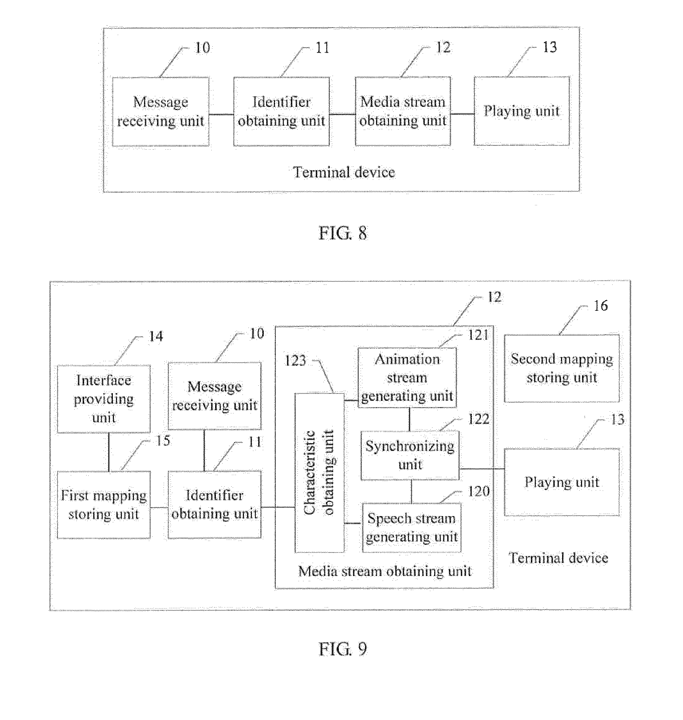

Further, an embodiment of the present invention provides a terminal device, that is, the receiving terminal in the method embodiment shown in FIG. 1. The schematic structural diagram is shown in FIG. 8. The terminal device includes:
a message receiving unit 10, configured to receive a message, where the message includes a user identifier and text information;
an identifier obtaining unit 11, configured to obtain a speech identifier and an image identifier corresponding to the user identifier in the message received by the message receiving unit 10, where the speech identifier is used to indicate a speech characteristic parameter, and the image identifier is used to indicate an image characteristic parameter;
a media stream obtaining unit 12, configured to generate or obtain a speech animation stream according to the speech characteristic parameter indicated by the speech identifier obtained by the identifier obtaining unit 11, the image characteristic parameter indicated by the image identifier obtained by the identifier obtaining unit 11, and the text information, where the media stream obtaining unit 12 may specifically generate the speech animation stream according to a speech animation technology, or request to obtain the speech animation stream from a server; and
a playing unit 13, configured to play the speech animation stream generated or obtained by the media stream obtaining unit 12.

In the terminal device in this embodiment of the present invention, a message receiving unit 10 receives a message that includes a user identifier and text information, an identifier obtaining unit 11 obtains a speech identifier and an image identifier corresponding to the user identifier, a media stream obtaining unit 12 generates or obtains a speech animation stream according to a speech characteristic parameter indicated by the speech identifier, an image characteristic parameter indicated by the image identifier, and the text information, and finally, a playing unit 13 plays the speech animation stream. In this way, the text information in the message can be played as a speech animation stream according to the user identifier, the text information in the message can be presented vividly, and the message can be presented in a personalized manner according to the speech identifier and the image identifier corresponding to the user identifier.

As shown in FIG. 9, in a specific embodiment, the terminal device may include not only the structure shown in FIG. 8, but also an interface providing unit 14, a first correspondence storing unit 15, and a second correspondence storing unit 16, where the media stream obtaining unit 12 may be implemented by a speech stream generating unit 120, an animation stream generating unit 121, a synchronizing unit 122, and a characteristic obtaining unit 123.

The interface providing unit 14 is configured to provide a setup interface, where the setup interface is used to receive a correspondence between the user identifier and the speech identifier and the image identifier.

The first correspondence storing unit 15 is configured to receive the correspondence between the user identifier and the speech identifier and the image identifier from the setup interface, and store the correspondence.

The second correspondence storing unit 16 is configured to: obtain an image sample, extract an image characteristic parameter of the image sample, and store the image characteristic parameter and the image identifier according to a first correspondence; and obtain a speech sample, extract a speech characteristic parameter of the speech sample, and store the speech characteristic parameter and the speech identifier according to a second correspondence.

The characteristic obtaining unit 123 is configured to obtain the speech characteristic parameter indicated by the speech identifier obtained by the identifier obtaining unit 11, and obtain the image characteristic parameter indicated by the image identifier obtained by the identifier obtaining unit 11.

The speech stream generating unit 120 is configured to convert the text information into a phoneme time sequence and a speech stream according to the speech characteristic parameter indicated by the speech identifier and obtained by the characteristic obtaining unit 123.

The animation stream generating unit 121 is configured to generate an animation stream according to the phoneme time sequence generated by the speech stream generating unit 120 and the image characteristic parameter indicated by the image identifier and obtained by the characteristic obtaining unit 123.

The synchronizing unit 122 is configured to synchronize and synthesize the speech stream and the animation stream into a speech animation stream.

In the terminal device provided in this embodiment of the present invention, after a message receiving unit 10 receives a message, an identifier obtaining unit 11 obtains a corresponding speech identifier and a corresponding image identifier according to the user identifier in the message; a characteristic obtaining unit 123 in a media stream obtaining unit 12 obtains a speech characteristic parameter and an image characteristic parameter; a speech stream generating unit 120 generates a phoneme time sequence and a speech stream according to text information in the message and the speech characteristic parameter indicated by the speech identifier and obtained by the characteristic obtaining unit 123; an animation stream generating unit 121 generates an animation stream according to the phoneme time sequence and the image characteristic parameter indicated by the image identifier and obtained by the characteristic obtaining unit 123; and finally, a synchronizing unit 122 synchronizes and synthesizes the speech stream and the animation stream into a speech animation stream, and a playing unit 13 plays the speech animation stream synthesized by the synchronizing unit 122.

In this embodiment, an interface providing unit 14 may provide a setup interface for the user to set the speech identifier and the image identifier corresponding to a user identifier; after receiving the speech identifier and the image identifier edited on the setup interface by the user corresponding to the user identifier, a first correspondence storing unit 15 stores a correspondence between the user identifier and the speech identifier and the image identifier; therefore, according to the correspondence stored by the first correspondence storing unit 15, the identifier obtaining unit 11 obtains the speech identifier and the image identifier corresponding to the user identifier in the message received by the message receiving unit 10; and the terminal device may store the image characteristic parameter and the speech characteristic parameter through a second correspondence storing unit 16, and therefore, the characteristic obtaining unit 123 in the media stream obtaining unit 12 may obtain the image characteristic parameter and the speech characteristic parameter according to the correspondence stored by the second correspondence storing unit 16.

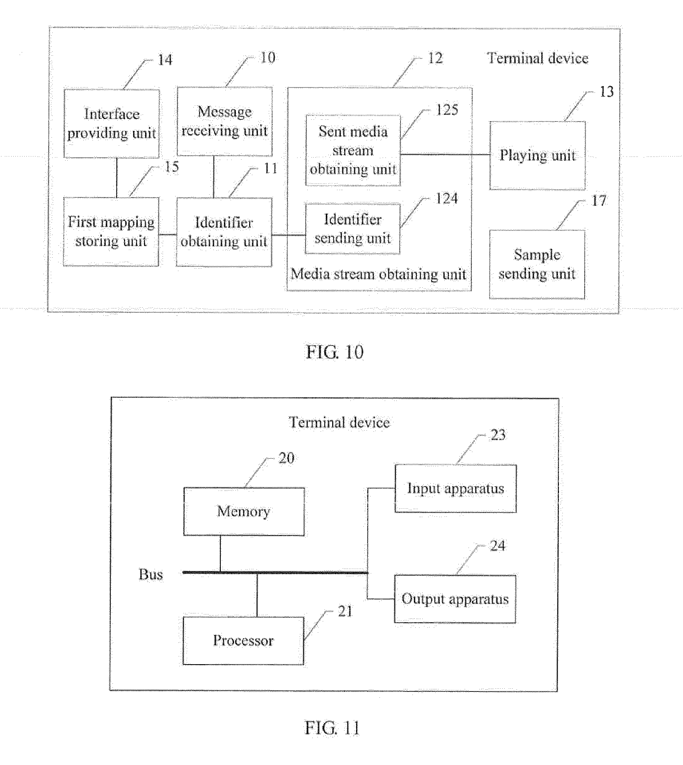

As shown in FIG. 10, in another specific embodiment, a terminal device may include not only the structure shown in FIG. 8, but also an interface providing unit 14, a first correspondence storing unit 15, and a sample sending unit 17, where the media stream obtaining unit 12 may be implemented by an identifier sending unit 124 and a sent media stream obtaining unit 125.

The sample sending unit 17 is configured to: obtain an image sample and send the obtained image sample to a server, so as to instruct the server to extract an image characteristic parameter of the image sample and store the image characteristic parameter and the image identifier according to a first correspondence; and obtain a speech sample and send the obtained speech sample to the server, so as to instruct the server to extract a speech characteristic parameter of the speech sample and store the speech characteristic parameter and the image identifier according to a second correspondence.

The identifier sending unit 124 is configured to send the speech identifier and the image identifier obtained by the identifier obtaining unit 11 to the server, so as to instruct the server to generate a speech animation stream of the text information according to the speech characteristic parameter indicated by the speech identifier, the image characteristic parameter indicated by the image identifier, and the text information; the sent media stream obtaining unit 125 is configured to obtain the speech animation stream sent by the server, and the playing unit 13 plays the speech animation stream.

In this embodiment, the terminal device may use a sample sending unit 17 to send an image sample and a speech sample to the server, and the server stores the speech characteristic parameter and the speech identifier according to a second correspondence, and stores the image identifier and the image characteristic parameter according to a first correspondence, thereby saving storage resources of the terminal device.

Further, an embodiment of the present invention provides a terminal device, that is, the receiving terminal in the method embodiment shown in FIG. 1. The schematic structural diagram is shown in FIG. 11. The terminal device includes a memory 20, a processor 21, an input apparatus 23, and an output apparatus 24, which are all connected to a bus.

The memory 20 is configured to store data input by the input apparatus 23, and information such as files required by the processor 21 for processing data.

The input apparatus 23 and the output apparatus 24 are ports for communications between a user terminal and other devices.

In this embodiment, after receiving a message, the input apparatus 23 transmits the message to the processor 21, where the message includes a user identifier and text information; and the processor 21 may perform the following steps: obtaining a speech identifier and an image identifier corresponding to the user identifier, generating or obtaining a speech animation stream according to a speech characteristic parameter indicated by the speech identifier, an image characteristic parameter indicated by the image identifier, and the text information, and playing the speech animation stream.

Further, before obtaining the speech identifier and the image identifier, the processor 21 may provide a setup interface; from the setup interface, a correspondence between the user identifier and the speech identifier and the image identifier may be received and transmitted to the memory 20 for storing. In this way, the processor 21 can obtain the speech identifier and the image identifier according to the correspondence stored in the memory 20.

Further, in one circumstance, when obtaining the generated speech animation stream, the processor 21 may obtain the speech characteristic parameter indicated by the speech identifier and the image characteristic parameter indicated by the image identifier first; convert the text information into a phoneme time sequence and a speech stream according to the speech characteristic parameter indicated by the speech identifier; generate an animation stream according to the phoneme time sequence and the image characteristic parameter indicated by the image identifier; and synchronize and synthesize the speech stream and the animation stream into a speech animation stream. Under this circumstance, the processor 21 may preset the image characteristic parameter and the speech characteristic parameter through the following steps: Specifically, the processor 21 may obtain an image sample, extract the image characteristic parameter of the image sample, and transmit the image identifier and the image characteristic parameter to the memory 20 so as to store the image characteristic parameter and the image identifier according to a first correspondence. The processor 21 may also obtain a speech sample, extract the speech characteristic parameter of the speech sample, and transmit the speech characteristic parameter and the speech identifier to the memory 20 so as to store them according to a second correspondence. When obtaining the speech characteristic parameter and the image characteristic parameter in the process of generating the speech animation stream, the processor 21 may obtain them according to the second correspondence and the first correspondence stored in the memory 20 respectively.

Further, in another circumstance, the processor 21 may control the output apparatus 24 to send the speech identifier and the image identifier to a server, so as to instruct the server to generate a speech animation stream of the text information according to the speech characteristic parameter indicated by the speech identifier, the image characteristic parameter indicated by the image identifier, and the text information. Upon receiving the speech animation stream sent by the server, the input apparatus 23 may transmit it to the processor 21 for further processing. Under this circumstance, the processor 21 may obtain an image sample and a speech sample, and control the output apparatus 24 to send the image sample to the server, so as to instruct the server to extract an image characteristic parameter of the image sample and store the image characteristic parameter and the image identifier according to the first correspondence. Further, the processor 21 may control the output apparatus 24 to send the obtained speech sample to the server, so as to instruct the server to extract a speech characteristic parameter of the speech sample and store the speech characteristic parameter and the image identifier according to the second correspondence.

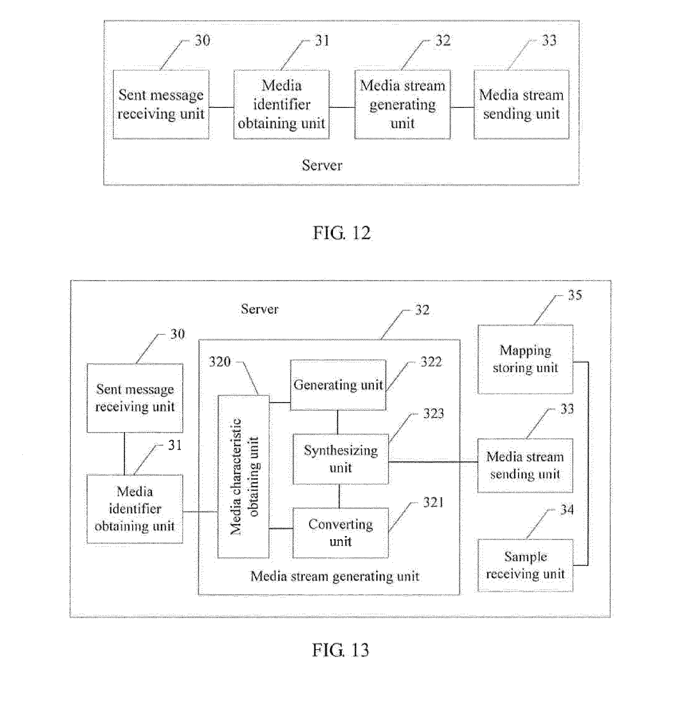

Further, an embodiment of the present invention provides a server, that is, the network server in the method embodiment shown in FIG. 3. The schematic structural diagram is shown in FIG. 12. The network server includes:
a sent message receiving unit 30, configured to receive a message sent by a sending terminal, where the message includes text information and a user identifier of a user corresponding to the sending terminal;
a media identifier obtaining unit 31, configured to obtain a speech identifier and an image identifier corresponding to the user identifier in the message received by the sent message receiving unit 30 from the sending terminal according to a pre-stored correspondence between the user identifier and the speech identifier and the image identifier, where the speech identifier is used to indicate a speech characteristic parameter required for generating a speech in the speech animation stream when generating the speech animation stream, and the image identifier is used to indicate an image characteristic parameter required for generating an image in the speech animation stream when generating the speech animation stream;
a media stream generating unit 32, configured to generate a speech animation stream according to the speech characteristic parameter indicated by the speech identifier and the image characteristic parameter indicated by the image identifier corresponding to the user identifier which is sent by the sending terminal which are obtained by the media identifier obtaining unit 31, and the text information; and
a media stream sending unit 33, configured to send the generated speech animation stream to a receiving terminal, so that the receiving terminal plays the speech animation stream after receiving the stream.

In the embodiment of the present invention, while a message that includes text information and a user identifier corresponding to a sending terminal is sent from the sending terminal to a receiving terminal, after the message passes through a network server, a sent message receiving unit 30 in the network server receives the message, a media identifier obtaining unit 31 obtains a speech identifier and an image identifier corresponding to the user identifier, a media stream generating unit 32 generates a speech animation stream, and a media stream sending unit 33 sends the generated speech animation stream to the receiving terminal for playing, where the speech animation stream is generated according to the speech characteristic parameter indicated by the speech identifier, the image characteristic parameter indicated by the image identifier, and the text information. In this way, the text information in the message can be played as different speech animation streams according to different user identifiers, the text information in the message is played vividly, and the message is played in a personalized manner according to the speech identifier and the image identifier corresponding to the user identifier. Furthermore, in this embodiment, the receiving terminal does not need to generate the speech animation stream, which relieves the load of the terminal.

As shown in FIG. 13, in a specific embodiment, a server may include not only the structure shown in FIG. 12, but also a sample receiving unit 34 and a correspondence storing unit 35, and the media stream generating unit 32 may be specifically implemented by a media characteristic obtaining unit 320, a converting unit 321, a generating unit 322, and a synthesizing unit 323.

The media characteristic obtaining unit 320 is configured to obtain the speech characteristic parameter indicated by the speech identifier obtained by the media identifier obtaining unit 31, and obtain the image characteristic parameter indicated by the image identifier obtained by the media identifier obtaining unit 31.

The converting unit 321 is configured to convert the text information into a phoneme time sequence and a speech stream according to the speech characteristic parameter indicated by the speech identifier and obtained by the media characteristic obtaining unit 320.

The generating unit 322 is configured to generate an animation stream according to the phoneme time sequence generated by conversion by the converting unit 321 and the image characteristic parameter indicated by the image identifier and obtained by the media characteristic obtaining unit 320.

The synthesizing unit 323 is configured to synchronize and synthesize the speech stream generated by conversion by the converting unit 321 and the animation stream generated by the generating unit 322 into a speech animation stream.

The sample receiving unit 34 is configured to receive an image sample and a speech sample sent by the terminal device; the correspondence storing unit 35 is configured to: extract an image characteristic parameter of the image sample received by the sample receiving unit 34, and store the image characteristic parameter and the image identifier according to a first correspondence; and extract a speech characteristic parameter of the speech sample received by the sample receiving unit 34, and store the speech characteristic parameter and the image identifier according to a second correspondence. In this way, the media characteristic obtaining unit 320 can obtain the speech characteristic parameter according to the second correspondence stored in the correspondence storing unit 35, and obtain the image characteristic parameter according to the first correspondence stored in the correspondence storing unit 35.

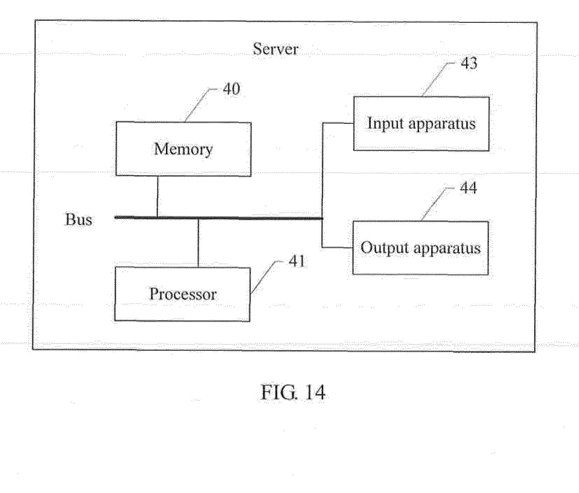

Further, an embodiment of the present invention provides a server, that is, the network server in the method embodiment shown in FIG. 3. The schematic structural diagram is shown in FIG. 14. The server includes a memory 40, a processor 41, an input apparatus 43, and an output apparatus 44, which are all connected to a bus.

The memory 40 is configured to store data input by the input apparatus 43, and information such as files required by the processor 41 for processing data.

The input apparatus 43 and the output apparatus 44 are ports for communications between a user terminal and other devices.

In this embodiment, the input apparatus 43 receives a message sent by a sending terminal and then transmits it to the processor 41, where the message includes text information and a user identifier of a user corresponding to the sending terminal; the processor 41 obtains a speech identifier and an image identifier corresponding to the user identifier which is sent by the sending terminal according to a correspondence between the user identifier and the speech identifier and the image identifier, where the correspondence is stored in the memory 40, generates a speech animation stream according to the speech characteristic parameter indicated by the speech identifier and the image characteristic parameter indicated by the image identifier corresponding to the user identifier which is sent by the sending terminal, and the text information, and controls the output apparatus 44 to send the generated speech animation stream to the receiving terminal, so that the receiving terminal plays the speech animation stream after receiving the stream.

Further, when generating the speech animation stream, the processor 41 in this embodiment may obtain the speech characteristic parameter indicated by the speech identifier and the image characteristic parameter indicated by the image identifier first; and then convert the text information into a phoneme time sequence and a speech stream according to the speech characteristic parameter indicated by the speech identifier; generate an animation stream according to the phoneme time sequence and the image characteristic parameter indicated by the image identifier; and synchronize and synthesize the speech stream and the animation stream into a speech animation stream.

Further, in this embodiment, speech characteristics and image characteristics may be preset in the memory 40; specifically, upon receiving an image sample and a speech sample sent by the terminal device, the input apparatus 43 transmits the samples to the processor 41; the processor 41 extracts an image characteristic parameter of the image sample, and stores the image characteristic parameter and the image identifier into the memory 40 according to a first correspondence; and the processor 41 may further extract a speech characteristic parameter of the speech sample, and store the speech characteristic parameter and the image identifier into the memory 40 according to a second correspondence. In this way, while generating the speech animation stream, the processor 41 can obtain the speech characteristic parameter according to the second correspondence stored in the memory 40, and obtain the image characteristic parameter according to the first correspondence stored in the memory 40.

Further, an embodiment of the present invention provides a message playing system, including a receiving terminal and a server.

The receiving terminal is configured to: receive a message, where the message includes a user identifier and text information; obtain a speech identifier and an image identifier corresponding to the user identifier; obtain a speech animation stream according to the speech characteristic parameter indicated by the speech identifier, the image characteristic parameter indicated by the image identifier, and the text information, and play the speech animation stream, where the speech identifier is used to indicate the speech characteristic parameter, and the image identifier is used to indicate the image characteristic parameter.

The server is configured to generate a speech animation stream of the text information according to the speech characteristic parameter indicated by the speech identifier, the image characteristic parameter indicated by the image identifier, and the text information, and send the speech animation stream to the receiving terminal. The specific method for generating the speech animation stream has been described in the foregoing method embodiment.

The receiving terminal may be the terminal device shown in FIG. 8, FIG. 10, or FIG. 11, and the messages may be played between units in the terminal device according to the method described in the method embodiment shown in FIG. 1, which is not detailed herein.

Further, an embodiment of the present invention provides a message playing system, including a receiving terminal and a network server.

The network server is configured to: receive a message sent by a sending terminal, where the message includes text information and a user identifier of a user corresponding to the sending terminal; obtain a speech identifier and an image identifier corresponding to the user identifier which is sent by the sending terminal according to a pre-stored correspondence between the user identifier and the speech identifier and the image identifier, and generate a speech animation stream according to the speech characteristic parameter indicated by the speech identifier and the image characteristic parameter indicated by the image identifier corresponding to the user identifier which is sent by the sending terminal, and the text information; and send the generated speech animation stream to the receiving terminal, where the speech identifier is used to indicate the speech characteristic parameter, and the image identifier is used to indicate the image characteristic parameter.

The receiving terminal is configured to receive the speech animation stream sent by the network server, and play the speech animation stream.

The network server may be the server shown in any one of FIG. 12 to FIG. 14, and the messages may be played between units in the network server according to the method described in the method embodiment shown in FIG. 3, which is not detailed herein.

A person of ordinary skill in the art may understand that all or a part of the steps of the methods according to the embodiments may be implemented by a program instructing relevant hardware. The program may be stored in a computer readable storage medium, which may be a read only memory (ROM), a random access memory (RAM), a magnetic disk, or an optical disk.

A method, a system, and relevant devices for playing a message according to embodiments of the present invention have been described in detail. Although the principle and implementation of the present invention are described with reference to exemplary embodiments, the embodiments are only intended to help understand the method and core idea of the present invention. In addition, with respect to the implementation and applicability of the present invention, modifications and variations may be made by persons of ordinary skill in the art according to the idea of the present invention. Therefore, the specification shall not be construed as a limitation on the present invention.

## Claims

1. A message playing method, applicable to a terminal device, comprising:
receiving a message, wherein the message comprises a user identifier and text information;
obtaining a speech identifier and an image identifier corresponding to the user identifier, wherein the speech identifier is used to indicate a speech characteristic parameter, and the image identifier is used to indicate an image characteristic parameter; and
generating or obtaining a speech animation stream according to the speech characteristic parameter indicated by the speech identifier, the image characteristic parameter indicated by the image identifier, and the text information, and playing the speech animation stream.

2. The method according to claim 1, wherein before receiving the message, the method further comprises:
providing a setup interface, wherein the setup interface is used to receive a correspondence between the user identifier and the speech identifier and the image identifier; and
receiving the correspondence between the user identifier and the speech identifier and the image identifier from the setup interface, and storing the correspondence;
the obtaining a speech identifier and an image identifier corresponding to the user identifier comprises:
obtaining the speech identifier and the image identifier corresponding to the user identifier according to the stored correspondence.

3. The method according to claim 1 or 2, wherein the generating a speech animation stream according to the speech characteristic parameter indicated by the speech identifier, the image characteristic parameter indicated by the image identifier, and the text information comprises:
obtaining, by the terminal device, the speech characteristic parameter indicated by the speech identifier, and obtaining the image characteristic parameter indicated by the image identifier;
converting, by the terminal device, the text information into a phoneme time sequence and a speech stream according to the speech characteristic parameter indicated by the speech identifier;
generating, by the terminal device, an animation stream according to the phoneme time sequence and the image characteristic parameter indicated by the image identifier; and
synchronizing and synthesizing, by the terminal device, the speech stream and the animation stream into a speech animation stream.

4. The method according to claim 3, wherein before receiving the message, the method further comprises:
obtaining an image sample and a speech sample;
extracting an image characteristic parameter of the image sample, and storing the image characteristic parameter and the image identifier according to a first correspondence; and
extracting a speech characteristic parameter of the speech sample, and storing the speech characteristic parameter and the speech identifier according to a second correspondence;
the obtaining the speech characteristic parameter indicated by the speech identifier and the image characteristic parameter indicated by the image identifier comprises: obtaining, according to the second correspondence, the speech characteristic parameter indicated by the speech identifier, and obtaining, according to the first correspondence, the image characteristic parameter indicated by the image identifier.

5. The method according to claim 1 or 2, wherein the obtaining a speech animation stream according to the speech characteristic parameter indicated by the speech identifier, the image characteristic parameter indicated by the image identifier, and the text information comprises:
sending the speech identifier and the image identifier to a server, so as to instruct the server to generate a speech animation stream of the text information according to the speech characteristic parameter indicated by the speech identifier, the image characteristic parameter indicated by the image identifier, and the text information; and
obtaining the speech animation stream sent by the server.

6. The method according to claim 5, wherein the generating, by the server, a speech animation stream of the text information according to the speech characteristic parameter indicated by the speech identifier, the image characteristic parameter indicated by the image identifier, and the text information specifically comprises:
obtaining, by the server, the speech characteristic parameter indicated by the speech identifier, and obtaining the image characteristic parameter indicated by the image identifier;
converting, by the server, the text information into a phoneme time sequence and a speech stream according to the speech characteristic parameter indicated by the speech identifier;
generating, by the server, an animation stream according to the phoneme time sequence and the image characteristic parameter indicated by the image identifier; and
synchronizing and synthesizing, by the server, the speech stream and the animation stream into a speech animation stream.

7. The method according to claim 6, wherein before receiving the message, the method further comprises:
obtaining an image sample and a speech sample;
sending the image sample to the server, so as to instruct the server to extract an image characteristic parameter of the image sample and store the image characteristic parameter and the image identifier according to a first correspondence; and
sending the obtained speech sample to the server, so as to instruct the server to extract a speech characteristic parameter of the speech sample and store the speech characteristic parameter and the speech identifier according to a second correspondence;
the obtaining, by the server, the speech characteristic parameter indicated by the speech identifier and the image characteristic parameter indicated by the image identifier comprises: obtaining, according to the second correspondence, the speech characteristic parameter indicated by the speech identifier, and obtaining, according to the first correspondence, the image characteristic parameter indicated by the image identifier.

8. A message playing method, applicable to a network server, comprising:
receiving a message sent by a sending terminal, wherein the message comprises text information and a user identifier of a user corresponding to the sending terminal;
obtaining a speech identifier and an image identifier corresponding to the user identifier which is sent by the sending terminal according to a pre-stored correspondence between the user identifier and the speech identifier and the image identifier, wherein the speech identifier is used to indicate a speech characteristic parameter, and the image identifier is used to indicate an image characteristic parameter;
generating a speech animation stream according to the speech characteristic parameter indicated by the speech identifier, the image characteristic parameter indicated by the image identifier, and the text information; and
sending the generated speech animation stream to a receiving terminal, so that the receiving terminal plays the speech animation stream after receiving the stream.

9. The method according to claim 8, wherein the generating a speech animation stream according to the speech characteristic parameter indicated by the speech identifier, the image characteristic parameter indicated by the image identifier, and the text information specifically comprises:
obtaining the speech characteristic parameter indicated by the speech identifier and obtaining the image characteristic parameter indicated by the image identifier;
converting the text information into a phoneme time sequence and a speech stream according to the speech characteristic parameter indicated by the speech identifier;
generating an animation stream according to the phoneme time sequence and the image characteristic parameter indicated by the image identifier; and
synchronizing and synthesizing the speech stream and the animation stream into a speech animation stream.

10. The method according to claim 9, wherein before receiving the message sent by the terminal device, the method further comprises:
receiving an image sample and a speech sample sent by the terminal device;
extracting an image characteristic parameter of the image sample, and storing the image characteristic parameter and the image identifier according to a first correspondence; and
extracting a speech characteristic parameter of the speech sample, and storing the speech characteristic parameter and the image identifier according to a second correspondence;
the obtaining the speech characteristic parameter indicated by the speech identifier specifically comprises: obtaining, according to the second correspondence, the speech characteristic parameter indicated by the speech identifier; and the obtaining the image characteristic parameter indicated by the image identifier specifically comprises: obtaining, according to the first correspondence, the image characteristic parameter indicated by the image identifier.

11. The method according to any one of claims 8 to 10, wherein the sending terminal is a mobile phone, the message sent by the sending terminal is a short message, and the user identifier comprised in the message is a mobile phone number.

12. A terminal device, comprising:
a message receiving unit, configured to receive a message, wherein the message comprises a user identifier and text information;
an identifier obtaining unit, configured to obtain a speech identifier and an image identifier corresponding to the user identifier in the sent message received by the message receiving unit, wherein the speech identifier is used to indicate a speech characteristic parameter, and the image identifier is used to indicate an image characteristic parameter;
a media stream obtaining unit, configured to generate or obtain a speech animation stream according to the speech characteristic parameter indicated by the speech identifier, the image characteristic parameter indicated by the image identifier, and the text information; and
a playing unit, configured to play the speech animation stream generated or obtained by the media stream obtaining unit.

13. The terminal device according to claim 12, further comprising:
an interface providing unit, configured to provide a setup interface, wherein the setup interface is used to receive a correspondence between the user identifier and the speech identifier and the image identifier; and
a first correspondence storing unit, configured to receive the correspondence between the user identifier and the speech identifier and the image identifier from the setup interface, and store the correspondence; wherein
the identifier obtaining unit is specifically configured to obtain the speech identifier and the image identifier corresponding to the user identifier according to the correspondence stored by the first correspondence storing unit.

14. The terminal device according to claim 12 or 13, wherein the media stream obtaining unit specifically comprises:
a characteristic obtaining unit, configured to obtain the speech characteristic parameter indicated by the speech identifier obtained by the identifier obtaining unit, and obtain the image characteristic parameter indicated by the image identifier obtained by the identifier obtaining unit;
a speech stream generating unit, configured to convert the text information into a phoneme time sequence and a speech stream according to the speech characteristic parameter indicated by the speech identifier;
an animation stream generating unit, configured to generate an animation stream according to the phoneme time sequence generated by the speech stream generating unit and the image characteristic parameter indicated by the image identifier; and
a synchronizing unit, configured to synchronize and synthesize the speech stream and the animation stream into a speech animation stream.

15. The terminal device according to claim 14, further comprising:
a second correspondence storing unit, configured to: obtain an image sample, extract an image characteristic parameter of the image sample, and store the image characteristic parameter and the image identifier according to a first correspondence; and obtain a speech sample, extract a speech characteristic parameter of the speech sample, and store the speech characteristic parameter and the speech identifier according to a second correspondence; wherein:
the characteristic obtaining unit is specifically configured to obtain the image characteristic parameter indicated by the image identifier and the speech characteristic parameter indicated by the speech identifier respectively according to the first correspondence and the second correspondence stored by the second correspondence storing unit.

16. The terminal device according to claim 12 or 13, wherein the media stream obtaining unit specifically comprises:
an identifier sending unit, configured to send the speech identifier and the image identifier to a server, so as to instruct the server to generate a speech animation stream of the text information according to the speech characteristic parameter indicated by the speech identifier, the image characteristic parameter indicated by the image identifier, and the text information; and
a sent media stream obtaining unit, configured to obtain the speech animation stream sent by the server.

17. The terminal device according to claim 16, further comprising:
a sample sending unit, configured to: obtain an image sample and send the obtained image sample to the server, so as to instruct the server to extract an image characteristic parameter of the image sample and store the image characteristic parameter and the image identifier according to a first correspondence; and obtain a speech sample and send the obtained speech sample to the server, so as to instruct the server to extract a speech characteristic parameter of the speech sample and store the speech characteristic parameter and the image identifier according to a second correspondence.

18. A server, comprising:
a sent message receiving unit, configured to receive a message sent by a sending terminal, wherein the message comprises text information and a user identifier of a user corresponding to the sending terminal;
a media identifier obtaining unit, configured to obtain a speech identifier and an image identifier corresponding to the user identifier which is sent by the sending terminal according to a pre-stored correspondence between the user identifier and the speech identifier and the image identifier, wherein the speech identifier is used to indicate a speech characteristic parameter, and the image identifier is used to indicate an image characteristic parameter;
a media stream generating unit, configured to generate a speech animation stream according to the speech characteristic parameter indicated by the speech identifier, the image characteristic parameter indicated by the image identifier, and the text information; and
a media stream sending unit, configured to send the generated speech animation stream to a receiving terminal, so that the receiving terminal plays the speech animation stream after receiving the stream.

19. The server according to claim 18, wherein the media stream generating unit specifically comprises:
a media characteristic obtaining unit, configured to obtain the speech characteristic parameter indicated by the speech identifier and obtain the image characteristic parameter indicated by the image identifier;
a converting unit, configured to convert the text information into a phoneme time sequence and a speech stream according to the speech characteristic parameter indicated by the speech identifier;
a generating unit, configured to generate an animation stream according to the phoneme time sequence and the image characteristic parameter indicated by the image identifier; and
a synthesizing unit, configured to synchronize and synthesize the speech stream and the animation stream into a speech animation stream.

20. The server according to claim 19, further comprising:
a sample receiving unit, configured to receive an image sample and a speech sample sent by the terminal device; and
a correspondence storing unit, configured to: extract an image characteristic parameter of the image sample, and store the image characteristic parameter and the image identifier according to a first correspondence; and extract a speech characteristic parameter of the speech sample, and store the speech characteristic parameter and the image identifier according to a second correspondence; wherein
the media characteristic obtaining unit is specifically configured to obtain, according to the second correspondence, the speech characteristic parameter indicated by the speech identifier, and obtain, according to the first correspondence, the image characteristic parameter indicated by the image identifier.

21. A message playing system, comprising a receiving terminal and a server, wherein:
the receiving terminal is the terminal device according to claim 16 or 17; and the server is configured to generate a speech animation stream of text information according to a speech characteristic parameter indicated by a speech identifier, an image characteristic parameter indicated by an image identifier, and the text information, and send the speech animation stream to the receiving terminal.

22. A message playing system, comprising a receiving terminal and a network server, wherein:
the network server is the server according to any one of claims 18 to 20; and the receiving terminal is configured to receive a speech animation stream sent by the network server, and play the speech animation stream.
